# FASCICULE DE BREVET EUROPEEN

(11) **EP 1 844 620 B1**
(45) Date de publication et mention de la délivrance du brevet: **04.08.2010**
(21) Numéro de dépôt: 06701680.8
(22) Date de dépôt: 12.01.2006
(51) Int. Cl.: H04M 1/27

(54) **PRESENTATION D'UN INDICATEUR D'OPERATEUR**
BEDIENER-INDIKATORPRÄSENTATION
OPERATOR INDICATOR PRESENTATION

(30) Priorité: 02.02.2005 FR 0501173
(43) Date de publication de la demande: 17.10.2007
(73) Titulaire: Gemalto SA, 92190 Meudon (FR)
(72) Inventeur: FAURE, Frédéric, 13260 CASSIS (FR); DI-GIROLAMO, PASCAL, 13600 LA CIOTAT (FR)
(86) Numéro de dépôt international: PCT/EP2006/050173
(87) Numéro de publication internationale: WO 2006/082123

(56) Documents cités:
- US-A- 5 940 493
- US-A1- 2003 140 169

## Description

La présente invention concerne un procédé pour présenter un indicateur d'opérateur d'un numéro d'appel dans un terminal d'usager. L'invention a trait également à une présentation d'un indicateur de validité du numéro d'appel.

Actuellement, les opérateurs de réseaux de radiocommunications cellulaires cherchent à offrir toujours plus d'informations et de services à leurs usagers. Les coûts de communication avec un terminal mobile appelé pour un usager appelant dépendent du réseau de radiocommunications cellulaire auquel le terminal appelé est rattaché. A l'heure où la portabilité des numéros de terminaux mobiles entre les opérateurs est recommandée afin que chaque usager puisse changer d'opérateur en conservant son numéro d'appel, il n'est plus possible d'évaluer le coût d'une communication en déterminant le réseau correspondant au numéro d'appel du terminal appelé, à l'aide d'un identificateur spécifique de réseau inclus dans le numéro d'appel.

Il existe donc un besoin de disposer d'un indicateur d'opérateur associé à un numéro d'appel dans un terminal pour que l'usager de celui-ci décide de communiquer ou non avec le terminal désigné par ce numéro d'appel.

Le document US-5.940.493 décrit un service d'annuaire téléphonique où un opérateur envoie un numéro de téléphone à un utilisateur en réponse à un nom qui lui est transmis par cet utilisateur. L'opérateur lié au numéro est également transmis à l'utilisateur. L'usager ne dispose donc pas du numéro de téléphone avant que celui-ci ne lui soit transmis par l'opérateur associé au numéro de téléphone n'est pas affiché à l'écran du terminal.

Le document US2003/140169 décrit un système de routage où un lien est également établi entre un opérateur et un numéro de téléphone. Le nom de l'opérateur n'est pas transmis au terminal et est uniquement utilisé à des fins de routage.

L'invention a pour **objectif** de fournir à un usager ayant un premier terminal mobile rattaché à un premier réseau de radiocommunications cellulaire un nouveau service relatif à un annuaire, en indiquant rapidement dans un terminal de l'usager si un numéro d'appel désigne un deuxième terminal mobile à appeler dont l'usager est abonné au premier réseau, y compris s'il a souscrit un contrat pour carte prépayée, ou est abonné à un réseau de radiocommunications cellulaire autre que ledit premier réseau, afin de remédier aux inconvénients précités.

Pour atteindre cet objectif, un procédé pour présenter un indicateur d'opérateur dans un terminal d'un usager ayant un premier terminal mobile rattaché à un premier réseau de radiocommunications cellulaire, ledit indicateur d'opérateur étant relatif à un deuxième terminal mobile dont le numéro d'appel est mémorisé dans le terminal d'usager, est caractérisé en ce qu'il comprend les étapes de :
transmettre le numéro d'appel depuis le terminal d'usager à un moyen serveur rattaché au premier réseau,
comparer, dans le moyen serveur, ledit numéro d'appel transmis à des numéros d'appel de terminaux mobiles rattachés au premier réseau, dans une première liste, afin de lire l'indicateur d'opérateur correspondant au numéro d'appel transmis,
transmettre l'indicateur d'opérateur en association au numéro d'appel transmis depuis le moyen serveur au terminal d'usager, et
dans le terminal d'usager, mémoriser l'indicateur d'opérateur transmis en correspondance au numéro d'appel transmis et présenter l'indicateur d'opérateur du premier réseau si celui-ci est à un premier état prédéterminé.

Le procédé permet également une comparaison, dans le moyen serveur, du numéro d'appel transmis à des numéros d'appel de terminaux mobiles rattachés à au moins un réseau de radiocommunications cellulaire autre que le premier réseau, dans une deuxième liste, afin de lire un indicateur de validité correspondant au numéro d'appel transmis et transmettre l'indicateur de validité en association à l'indicateur d'opérateur et au numéro d'appel transmis au terminal d'usager, et dans le terminal d'usager, mémoriser l'indicateur de validité transmis en correspondance au numéro d'appel transmis et présenter l'indicateur de validité si les indicateurs d'opérateur et de validité sont à un deuxième état prédéterminé, différent du premier état.

En souscrivant un abonnement à un service mettant en oeuvre le procédé de l'invention, la détermination d'un indicateur d'opérateur d'un numéro d'appel permet à un premier usager de décider de communiquer avec un autre usager désigné par ledit numéro d'appel en fonction du rattachement de cet autre usager au même réseau que le premier usager. Ainsi, si un usager est appelé par un terminal mobile inconnu, il peut évaluer le coût d'une communication de rappel à l'initiative de l'usager.

De surcroît, avec un développement des messageries instantanées accessibles à des terminaux mobiles, un usager peut sélectionner des communications selon des tarifs préférentiels relatifs à différents réseaux de radiocommunications cellulaires.

En outre, à l'aide du service de présentation d'indicateur selon l'invention, un usager peut être alerté grâce à une mise à jour automatique des indicateurs si un numéro d'appel est devenu invalide.

Selon une autre caractéristique de l'invention, le procédé peut comprendre en outre les étapes de :
générer une donnée numérique en correspondance à l'indicateur d'opérateur si celui-ci est au premier état, ou à l'indicateur de validité si celui-ci et l'indicateur d'opérateur sont au deuxième état,
transmettre la donnée numérique avec le numéro d'appel et les indicateurs d'opérateur et de validité depuis le moyen serveur au terminal d'usager,
mémoriser la donnée numérique transmise en correspondance au numéro d'appel transmis dans le terminal d'usager, et
transformer la donnée numérique pour la présenter dans le terminal d'usager.

L'invention concerne également un système pour présenter un indicateur d'opérateur dans un terminal d'un usager ayant un premier terminal mobile rattaché à un premier réseau de radiocommunications cellulaire, ledit indicateur d'opérateur étant relatif à un deuxième terminal mobile dont le numéro d'appel est mémorisé dans le terminal d'usager,
caractérisé en ce qu'il comprend un moyen serveur rattaché au premier réseau pour comparer ledit numéro d'appel transmis depuis le terminal d'usager à des numéros d'appel de terminaux mobiles rattachés au premier réseau, dans une première liste, afin de lire l'indicateur d'opérateur correspondant au numéro d'appel transmis et de transmettre l'indicateur d'opérateur en association au numéro d'appel transmis depuis le moyen serveur au terminal d'usager, et
en ce que le terminal d'usager comprend un moyen pour mémoriser l'indicateur d'opérateur transmis en correspondance au numéro d'appel transmis et un moyen pour présenter l'indicateur d'opérateur du premier réseau si celui-ci est à un premier état prédéterminé.

Le moyen serveur peut également comprendre un moyen pour comparer ledit numéro d'appel transmis à des numéros d'appel de terminaux mobiles rattachés à un réseau de radiocommunications cellulaire autre que le premier réseau, dans une deuxième liste, afin de lire un indicateur de validité correspondant au numéro d'appel transmis et transmettre l'indicateur de validité en association à l'indicateur d'opérateur et au numéro d'appel transmis au terminal d'usager, et le terminal d'usager comprend en outre un moyen pour mémoriser l'indicateur de validité transmis en correspondance au numéro d'appel transmis et un moyen pour présenter l'indicateur de validité si les indicateurs d'opérateur et de validité sont à un deuxième état prédéterminé, différent du premier état.

L'invention a également pour objet un support d'enregistrement portable à microcontrôleur pour présenter un indicateur d'opérateur dans un terminal d'un usager ayant un premier terminal mobile rattaché à un premier réseau de radiocommunications cellulaire, ledit indicateur d'opérateur étant relatif à un deuxième terminal mobile dont le numéro d'appel est mémorisé dans le terminal d'usager, caractérisé en ce qu'il comprend :
un moyen pour transmettre le numéro d'appel depuis le terminal d'usager à un moyen serveur rattaché au premier réseau,
un moyen pour mémoriser un indicateur d'opérateur transmis depuis le moyen serveur et en association au numéro d'appel transmis, ledit numéro d'appel transmis ayant été comparé dans le moyen serveur à des numéros d'appel de terminaux mobiles rattachés au premier réseau, dans une première liste, afin de lire l'indicateur d'opérateur correspondant au numéro d'appel transmis, et
un moyen pour présenter l'indicateur d'opérateur du premier réseau si celui-ci est à un premier état prédéterminé.

Le support d'enregistrement portable à microcontrôleur peut également comprendre :
un moyen pour mémoriser un indicateur de validité transmis depuis le moyen serveur en association au numéro d'appel transmis, ledit numéro d'appel transmis ayant été comparé dans le moyen serveur à des numéros d'appel de terminaux mobiles rattachés à un réseau de radiocommunications cellulaire autre que le premier réseau, dans une deuxième liste, afin de lire l'indicateur de validité correspondant au numéro d'appel transmis et transmettre l'indicateur de validité en association à l'indicateur d'opérateur et au numéro d'appel transmis au terminal d'usager, et
un moyen pour présenter l'indicateur de validité si les indicateurs d'opérateur et de validité sont à un deuxième état prédéterminé, différent du premier état.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système pour présenter un indicateur d'opérateur dans un terminal d'usager selon l'invention ;
- la figure 2 est un bloc-diagramme schématique d'une carte à puce pour présenter un indicateur d'opérateur dans un terminal d'usager selon l'invention ;

- la figure 3 est un algorithme des étapes principales du procédé pour présenter un indicateur d'opérateur dans un terminal d'usager selon une première réalisation de l'invention ; et
- la figure 4 est un algorithme des étapes principales du procédé pour présenter un indicateur d'opérateur dans un terminal d'usager selon une deuxième réalisation de l'invention.

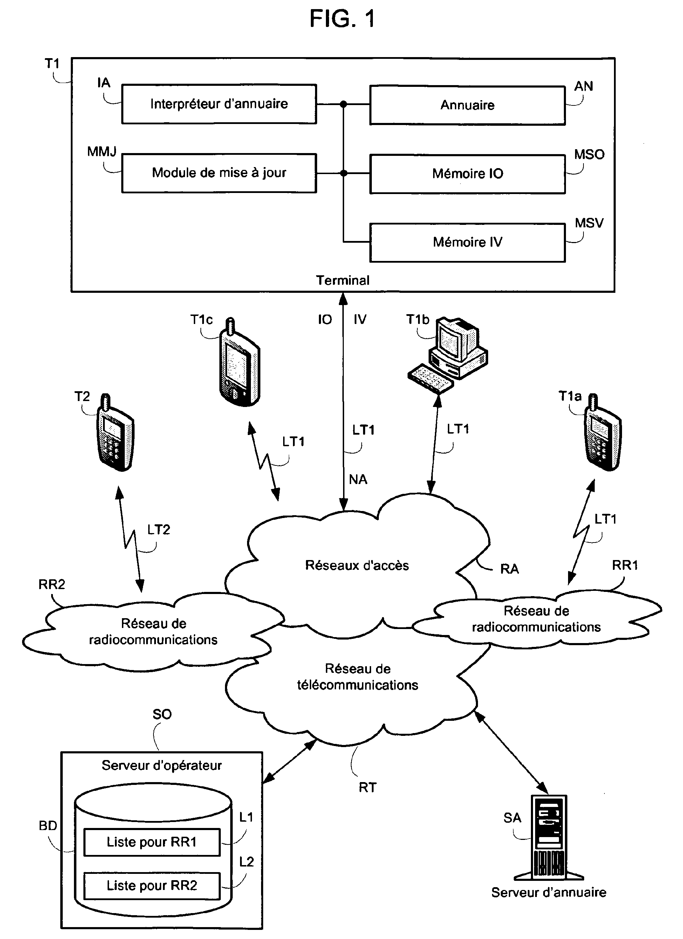

En référence à la figure 1, le **système** de présentation d'indicateur selon l'invention comprend principalement un serveur d'opérateur SO, un serveur d'annuaire SA et un terminal T1 d'un premier usager.

Le serveur d'opérateur SO, en tant qu'entité de service selon l'invention, est géré par l'opérateur d'un premier réseau de radiocommunications cellulaire RR1 auquel est rattaché un premier terminal mobile T1a appartenant à l'usager. Le serveur d'opérateur SO peut être relié ou incorporé à l'enregistreur de localisation nominale HLR (Home Location Register) du réseau RR1 qui contient notamment les profils d'abonnement des usagers abonnés au réseau RR1. Une base de données BD dans le serveur d'opérateur comprend une première liste L1 de numéros d'appel de terminaux mobiles rattachés au premier réseau RR1 et une deuxième liste L2 de numéros d'appel de terminaux mobiles rattachés à au moins un réseau de radiocommunications cellulaire RR2 autre que le premier réseau RR1.

La première liste L1 associe les numéros d'appel du premier réseau RR1 respectivement à des indicateurs d'opérateur logiques IO. Initialement, lorsqu'un usager a souscrit un abonnement auprès de l'opérateur du premier réseau RR1, l'indicateur d'opérateur IO associé au numéro d'appel de l'usager est mis à un premier état "1".

La deuxième liste L2 associe les numéros d'appel des réseaux RR2 autres que le premier réseau RR1 respectivement à des indicateurs de validité logiques IV. Initialement, lorsqu'un usager a souscrit un abonnement auprès de l'opérateur d'un réseau autre que le premier réseau RR1, l'indicateur de validité IV associé au numéro d'appel de l'usager est mis à un premier état "1".

Lorsqu'un numéro d'appel n'est attribué à aucun usager, les indicateurs d'opérateur et de validité correspondant au numéro d'appel sont à l'état "0". Les indicateurs d'opérateur et de validité basculent à l'état "0" lorsqu'un abonnement d'un usager est radié, sans souscrire un autre abonnement avec le même numéro d'appel.

La base de données BD est consultée pour déterminer si l'usager d'un terminal mobile T2 à appeler dont le numéro d'appel NA est transmis depuis le terminal d'usager T1 est abonné au premier réseau RR1, ou est abonné à un autre réseau RR2, le numéro d'appel étant alors valide dans le réseau RR2.

Le réseau de radiocommunications cellulaire RR2 correspond à l'un quelconque parmi plusieurs réseaux de radiocommunications cellulaires couvrant un territoire prédéterminé.

Par souci de simplification, un numéro d'appel MSIDN (Mobile Station ISDN Number) est considéré comme "appartenant" à un réseau de radiocommunications cellulaire lorsqu'un usager a souscrit un abonnement à ce réseau et possède un terminal mobile ayant notamment une carte à puce d'usager amovible dont l'adresse logique constante IMSI (International Mobile Subscriber Identity), comporte une partie MSIN (Mobile Subscriber Identification Number) correspondant à une partie PQ MCDU du numéro d'appel propre à l'usager abonné, quel que soit le déplacement du terminal mobile ou quel que soit le terminal mobile contenant la carte à puce. Dans ce cas, le terminal mobile de l'usager est considéré comme "rattaché" au réseau de radiocommunications cellulaire.

Le serveur d'annuaire SA est une plateforme qui est accessible depuis n'importe quel terminal mobile ou fixe à travers un réseau de télécommunications RT tel que l'internet. Le serveur d'annuaire SA et le terminal d'usager T1 peuvent échanger des requêtes et des réponses par exemple sous forme de messages courts à travers un centre de messages courts (Short Message Service Center). Le serveur d'annuaire SA comporte une passerelle d'accès pour communiquer avec le serveur d'opérateur SO par exemple directement ou indirectement à travers l'internet ou un réseau de signalisation propre à l'opérateur du réseau RR1, afin de transmettre des informations depuis le serveur d'opérateur au terminal d'usager T1.

Dans une variante, les données de base de données de l'opérateur sont réparties dans plusieurs bases de données reliées à plusieurs serveurs d'opérateurs. En particulier, la liste L2 peut être divisée en des listes de numéros d'appel de terminaux mobiles rattachés à des deuxièmes réseaux de radiocommunications cellulaires RR2 dans des serveurs d'opérateurs, ces listes étant actualisées respectivement par des opérateurs.

Dans la réalisation préférée montrée à la figure 1, afin de ne pas surcharger la figure, on a représenté seulement trois terminaux T1a, T1b et T1c par lesquels le premier usager peut communiquer avec le serveur d'annuaire SA. Les trois terminaux T1a, T1b et T1c sont désignés indifféremment par T1 dans la suite de la description. Le terminal d'usager T1 est relié à un réseau d'accès respectif RA par une liaison LT1.

Le terminal T1 est de préférence le premier terminal mobile T1a, la liaison LT1 est un canal de radiocommunications, et le réseau d'accès respectif RA comprend le réseau fixe d'un réseau de radiocommunications cellulaire, par exemple de type GSM (Global System for Mobile communications) avec un service GPRS (General Packet Radio Service), ou de type UMTS (Universal Mobile Telecommunications System).

De même, le terminal mobile T2 à appeler et le réseau de radiocommunications cellulaire respectif RR2 sont reliés par une liaison radio LT2.

Selon un autre exemple, le terminal d'usager T1 est un ordinateur personnel ou un terminal intelligent T1b, relié directement par modem à la liaison LT1 de type ligne xDSL ou RNIS (Réseau Numérique à Intégration de Services) reliée au réseau d'accès RA correspondant.

Selon un autre exemple, le terminal d'usager T1 comprend un dispositif ou objet électronique de télécommunications personnel à l'usager qui peut être un assistant numérique personnel communiquant T1c, par exemple de type PDA, pouvant lire une carte à puce et être relié à une borne d'un réseau local sans fil de faible portée du type WLAN (Wireless LAN) ou conforme a l'une des normes 802.1Xx, ou de moyenne portée selon le protocole WIMAx (World wide Interoperability Microwave Access).

Selon un autre exemple, le réseau d'accès RA comprend un réseau de raccordement de plusieurs terminaux d'usager.

Les terminaux d'usager T1 et les réseaux d'accès RA ne sont pas limités aux exemples ci-dessus et peuvent être constitués par d'autres terminaux et réseaux d'accès connus.

Le **terminal d'usager T1** comprend classiquement un processeur, des mémoires, une interface de communication, un afficheur, un clavier et un lecteur de carte à puce, et notamment en relation avec l'invention, un annuaire AN, une mémoire de statut d'opérateur MSO, une mémoire de statut de validité MSV, un interpréteur d'annuaire IA et un module de mise à jour MMJ. L'annuaire AN et les mémoires MSO et MSV sont inclus dans des espaces de mémoire non volatile dans le terminal T1.

L'annuaire AN liste les numéros d'appel NA à appeler ou à consulter depuis le terminal T1.

La mémoire de statut d'opérateur MSO est un espace de mémoire non volatile pour mémoriser les indicateurs IO relatifs à des numéros d'appel NA et indiquant chacun si le numéro d'appel respectif appartient au premier réseau RR1.

La mémoire de statut de validité MSV est un espace de mémoire non volatile pour mémoriser les indicateurs IV relatifs aux numéros d'appel NA et indiquant chacun si le numéro d'appel respectif est valide dans un réseau de radiocommunications cellulaire RR2 autre que le premier réseau RR1.

Les mémoires MSO et MSV précitées peuvent être des mémoires non volatiles accessibles par contact ou sans contact depuis le terminal T1, et/ou sont incluses dans l'annuaire AN.

L'interpréteur d'annuaire IA est une application d'interface d'usager qui accède aux numéros d'appel NA mémorisés dans l'annuaire AN et aux indicateurs IO et IV dans les mémoires MSO et MSV pour les présenter à l'usager via l'afficheur du terminal T1. L'interpréteur IA est de préférence une application de la carte UICC, ou selon une autre variante, est implémentée dans le terminal T1 et est par exemple incorporée à l'interface graphique d'usager dans le terminal T1.

Le module de mise à jour MMJ est une application qui communique avec le serveur d'annuaire SA et met à jour les mémoires MSO et MSV en mémorisant dans celles-ci les indicateurs IO et IV transmis par le serveur d'annuaire SA. Les enregistrements de nouveaux numéros d'appel dans l'annuaire AN, y compris des modifications de numéros d'appel déjà mémorisés, sont détectés périodiquement, ou sur requête de l'usager ou du réseau, par le module MMJ. Le module MMJ est de préférence une application de la carte UICC, ou selon une autre variante, est implémenté dans le terminal T1.

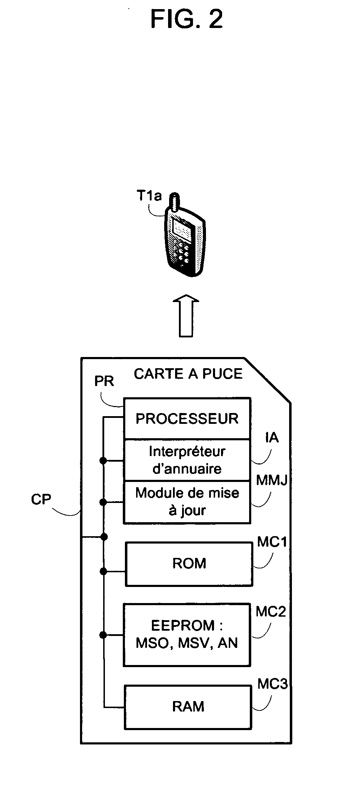

Selon une variante préférée du terminal d'usager représentée à la figure 2, le terminal accueille un support d'enregistrement comme une carte à puce amovible CP, dite carte à microcontrôleur ou carte à circuit intégré, avec ou sans contact, ou bien accessible depuis le terminal via un moyen de communication, par exemple de type infrarouge.

Lorsque le terminal T1 est un terminal mobile T1a, T1c, la carte à puce est du type UICC (Universal Integrated Circuit Card). La carte à puce est par exemple une carte SIM (Subscriber Identity Module) pour un réseau de radiocommunication cellulaire du type GSM ou GPRS, ou un module d'identité USIM ou RUIM (Removable User Identity Module) pour un réseau à accès multiple à répartition par codes CDMA (Coded Division Multiple Access) de la troisième génération (3GPP) du type UMTS (Universal Mobile Telecommunications System), ou de la troisième génération (3GPP2) du type CDMA 2000.

Dans d'autres exemples, la carte à puce peut être une clé USB, une "Flash-Memory Card" comme "Secure Digital Card", "Multi-Media Card", ou bien être remplacée par tout support d'enregistrement portable amovible à microcontrôleur, ou bien encore être accessible depuis le terminal via un moyen de communication, par exemple de type infrarouge.

Comme il est connu, la carte à puce CP comprend principalement un processeur PR, trois mémoires MC1 à MC3 et un port d'entrée/sortie connectable à un lecteur du terminal mobile pour échanger des commandes et réponses avec celui-ci. La mémoire MC1 est du type ROM ou Flash et inclut un système d'exploitation pour la carte et bien souvent une machine virtuelle du type JavaCard sur laquelle s'appuie le système d'exploitation. La mémoire MC2 est une mémoire non volatile par exemple EEPROM ou Flash pour notamment mémoriser des caractéristiques du profil de l'usager possédant la carte, ou des numéros d'appel dans un annuaire. La mémoire MC3 est une mémoire RAM ou SRAM servant plus particulièrement au traitement de données à échanger entre le processeur PR et un microcontrôleur inclus dans le terminal mobile T1a.

Dans cette variante, le module de mise à jour MMJ et l'interpréteur d'annuaire IA sont implémentés matériellement dans ou en liaison avec le processeur PR de la carte à puce CP. En variante, le module de mise à jour MMJ et l'interpréteur d'annuaire IA sont inclus sous forme de logiciel dans la mémoire ROM MC1. Le processeur PR de la carte CP exécute la plupart des étapes du procédé de présentation d'un indicateur d'opérateur selon l'invention tel que décrit ci-dessus en relation avec le terminal T1a. Deux espaces dans la mémoire non volatile MC2 de la carte sont réservés respectivement aux mémoires MSO et MSV du terminal selon la première réalisation montrée à la figure 1, et sont dédiés à la mémorisation des indicateurs IO et IV. Un troisième espace dans la mémoire non volatile MC2 de la carte est réservé à l'annuaire AN.

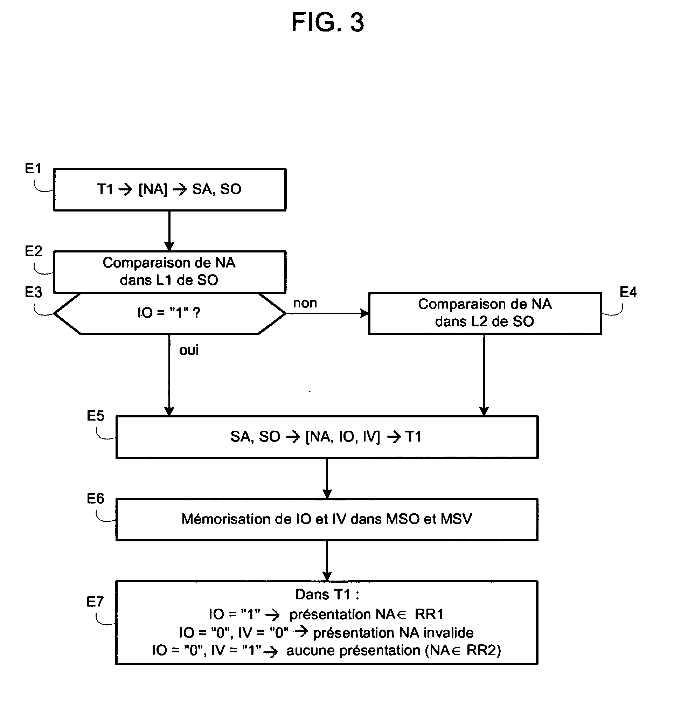

Selon une **première réalisation** montrée à la figure 3, le procédé de présentation d'indicateur d'opérateur dans un terminal d'usager T1 comprend des étapes E1 à E7 exécutées dans le système de présentation d'indicateur d'opérateur selon l'invention.

A l'étape E1, le module de mise à jour MMJ effectue les étapes préliminaires suivantes. Initialement, le module MMJ requiert l'établissement d'une communication avec le serveur d'annuaire AN via l'interface de communication du terminal d'usager T1 auquel il est associé. Cette communication peut être requise à l'initiative de l'usager, ou automatiquement à chaque période de surveillance de numéro d'appel au cours de laquelle au moins un nouveau numéro d'appel a été enregistré dans l'annuaire AN, ou automatiquement à l'initiative de l'opérateur depuis le serveur SA ou tout autre serveur, ou par exemple systématiquement au début d'une procédure d'appel mais avant l'établissement de l'appel. Cependant la communication peut être requise de manière autonome, par exemple dès que le module MMJ détecte un nouveau numéro d'appel composé par l'usager et enregistré dans l'annuaire AN. Ensuite, le module MMJ lit dans l'annuaire AN le numéro d'appel NA identique à un numéro international d'abonné mobile MSISDN (Mobile Subscriber ISDN Number) pour une entrée de l'annuaire AN correspondant classiquement par exemple à un nom de l'usager associé au numéro d'appel NA. Le module MMJ transmet alors au serveur d'annuaire SA le numéro d'appel NA qui est retransmis au serveur d'opérateur SO.

A l'étape E2, en réponse au numéro d'appel transmis NA, le serveur d'opérateur SO compare ledit numéro d'appel transmis aux numéros d'appel dans la première liste L1 correspondant à des terminaux mobiles T2 rattachés au premier réseau RR1.

Si le numéro d'appel transmis est inclus dans la première liste L1, le serveur d'opérateur SO lit l'état de l'indicateur d'opérateur IO associé au numéro d'appel transmis NA, à l'étape E3.

Si l'indicateur d'opérateur IO est à l'état "0", le serveur d'opérateur SO compare ledit numéro d'appel transmis NA aux numéros d'appel dans la deuxième liste L2 correspondant à des terminaux mobiles T2 rattachés à un réseau RR2 autre que le premier réseau RR1, à l'étape E4. Si le numéro d'appel transmis est inclus dans la deuxième liste L2, le serveur d'opérateur SO lit l'indicateur de validité IV correspondant au numéro d'appel transmis NA.

A l'étape E3, si l'indicateur d'opérateur IO est à l'état "1", il n'est pas nécessaire d'effectuer la comparaison dans la deuxième liste et l'indicateur de validité IV prend d'office la valeur "0". Ainsi, lorsque l'indicateur d'opérateur IO est dans le premier état "1", l'indicateur de validité IV est obligatoirement dans le deuxième état "0", et lorsque l'indicateur d'opérateur IO est dans le deuxième état "0", l'indicateur de validité IV peut être dans le premier état "0" ou le deuxième état "1". En effet, un terminal mobile T2 est rattaché soit au premier réseau RR1, soit à un réseau RR2. Lorsque l'indicateur d'opérateur IO et l'indicateur de validité IV sont dans le deuxième état, le terminal mobile T2 n'est rattaché à aucun réseau de radiocommunications cellulaire et le numéro d'appel correspondant est invalide.

A l'étape E5, le serveur d'opérateur SO transmet l'indicateur d'opérateur IO et l'indicateur de validité IV en association au numéro d'appel NA au serveur d'annuaire SA qui les retransmet au module de mise à jour MMJ du terminal T1.

A l'étape E6, le module de mise à jour MMJ écrit l'indicateur d'opérateur IO et l'indicateur de validité IV transmis depuis le serveur d'annuaire, en correspondance au numéro d'appel transmis NA, respectivement dans la mémoire de statut d'opérateur MSO et la mémoire de statut de validité MSV.

A l'étape E7, l'interpréteur d'annuaire IA génère la présentation de l'indicateur d'opérateur IO ou de l'indicateur de validité IV sur l'afficheur du terminal T1, chaque fois que l'usager sollicite une fonction de lecture du numéro d'appel NA, ou d'un paramètre, tel que nom, de l'usager auquel est attribué le numéro d'appel NA. Pour cela, l'interpréteur d'annuaire IA analyse, pour l'entrée de l'annuaire AN correspondant au numéro d'appel NA, l'indicateur d'opérateur IO et l'indicateur de validité IV respectivement dans la mémoire de statut d'opérateur MSO et la mémoire de statut de validité MSV. L'interpréteur d'annuaire IA présente alors à l'usager l'indicateur IO afin de l'informer que le numéro d'appel NA mémorisé dans l'annuaire AN du terminal T1 appartient au premier réseau RR1, lorsque l'indicateur d'opérateur IO est dans le premier état "1". Sinon l'interpréteur d'annuaire IA présente l'indicateur IV, sous la forme d'un signe prédéterminé ou d'une mention telle que "numéro non attribué", signifiant que le numéro d'appel n'appartient à aucun réseau de radiocommunications cellulaire et est donc invalide, lorsque l'indicateur d'opérateur IO et l'indicateur de validité IV sont au deuxième état "0". Dans ce cas, l'interpréteur et/ou le module de mise à jour MMJ peuvent proposer à l'usager d'effacer le numéro d'appel non attribué dans l'annuaire. Lorsque l'indicateur d'opérateur IO est dans le deuxième état "0" et l'indicateur de validité IV est dans le premier état "1", l'interpréteur d'annuaire IA ne présente aucun indicateur, ce qui signifie que le numéro d'appel appartient à un réseau RR2.

De préférence, l'état "1" de l'indicateur IO et la combinaison des états "0" des indicateurs IO et IV sont transformés par l'interpréteur IA en des icones ou couleurs respectifs présentés sur l'afficheur du terminal T1, et/ou en des mots synthétisés respectifs reproduits par un haut-parleur du terminal. Par ailleurs, cette présentation peut se faire de manière optionnelle lorsque l'usager souhaite personnaliser l'accès à ces informations, ou automatiquement lors de la détection d'un événement particulier, comme par exemple un signal de dépassement d'abonnement transmis par le réseau au terminal.

En variante, le terminal d'usager T1 est confondu avec le premier terminal mobile T1a qui présente lui-même les indicateurs d'opérateur et de validité transformés.

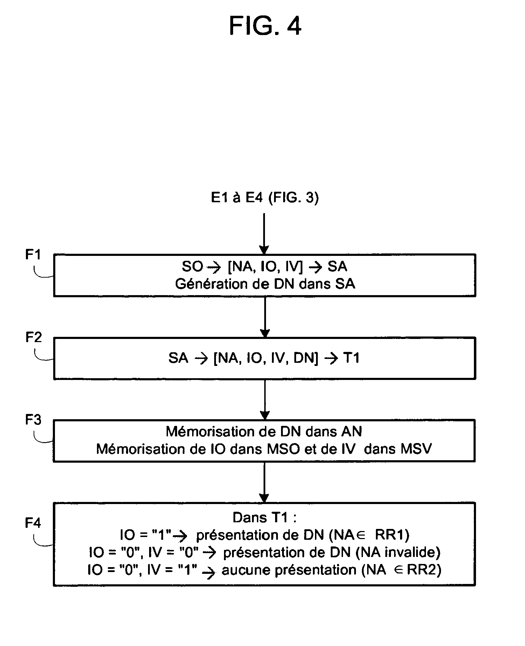

Selon une **deuxième réalisation** montrée à la figure 4, le terminal d'usager T1 reçoit également depuis le moyen serveur SA, SO une donnée numérique DN établissant une présentation de l'indicateur d'opérateur IO ou de l'indicateur de validité IV, selon les étapes F1 à F4 complétant le procédé de présentation d'un indicateur d'opérateur selon l'invention et exécutées également automatiquement dans le système de présentation d'indicateur.

Le serveur d'annuaire SA reçoit depuis le serveur d'opérateur l'indicateur d'opérateur IO et l'indicateur de validité IV et analyse les indicateurs transmis et déterminés précédemment aux étapes E2 à E4.

A l'étape F1, le serveur d'annuaire ayant reçu les indicateurs d'opérateur et de validité IO et IV génère directement une donnée numérique DN contribuant à l'établissement d'une présentation de l'indicateur d'opérateur en correspondance à l'indicateur d'opérateur IO si celui-ci est au premier état "1", ou à l'indicateur de validité IV si celui-ci et l'indicateur d'opérateur sont au deuxième état "0".

Puis les étapes E5 à E7 sont remplacées par les étapes F2 à F4. Le serveur d'annuaire SA transmet, à l'étape F2, la donnée numérique DN avec le numéro d'appel NA et les indicateurs d'opérateur et de validité IO et IV au module de mise à jour MMJ du terminal T1. A l'étape F3, le module de mise à jour MMJ mémorise la donnée numérique DN dans l'annuaire AN en correspondance au numéro d'appel transmis NA, conjointement à la mémorisation des indicateurs d'opérateur et de validité IO et IV dans les mémoires MSO et MSV. A l'étape F4, l'interpréteur d'annuaire IA analyse directement l'entrée de l'annuaire AN correspondant au numéro d'appel NA afin de présenter le numéro d'appel en association avec une transformation visuelle et/ou auditive de la donnée numérique DN transmise depuis le serveur d'annuaire, d'une manière analogue aux présentations des indicateurs déjà décrite.

L'invention décrite ici concerne un procédé et un système pour présenter notamment un indicateur d'opérateur IO correspondant à chaque numéro d'appel mémorisé dans le terminal d'usager T1. Selon une implémentation préférée, les étapes du procédé sont déterminées par les instructions d'un **programme** d'ordinateur incorporé dans un dispositif tel qu'un terminal T1 d'un usager ou tel qu'un support d'enregistrement portable à microcontrôleur tel qu'une carte à puce en liaison avec un terminal d'un usager, l'usager ayant un premier terminal mobile T1a rattaché à un premier réseau de radiocommunications cellulaire RR1, et le programme étant destiné à présenter un indicateur d'opérateur IO dans le terminal d'usager, ledit indicateur d'opérateur IO étant relatif à un deuxième terminal mobile T2 dont le numéro d'appel est mémorisé dans le terminal d'usager T1. Le programme comporte des instructions de programme qui, lorsque ledit programme est chargé et exécuté dans le dispositif dont le fonctionnement est alors commandé par l'exécution du programme, réalisent les étapes du procédé de présentation d'indicateur selon l'invention.

## Revendications

1. Procédé pour présenter un indicateur d'opérateur (IO) dans un terminal (T1) d'un usager ayant un premier terminal mobile (T1a) rattaché à un premier réseau de radiocommunications cellulaire (RR1), ledit indicateur d'opérateur (IO) étant relatif à un deuxième terminal mobile (T2) dont le numéro d'appel est mémorisé dans le terminal d'usager (T1), **caractérisé en ce qu'**il comprend les étapes de :
transmettre (E1) le numéro d'appel (NA) depuis le terminal d'usager (T1) à un moyen serveur (SA, SO) rattaché au premier réseau (RR1),
comparer (E2), dans le moyen serveur (SA, SO), ledit numéro d'appel transmis (NA) à des numéros d'appel de terminaux mobiles rattachés au premier réseau, dans une première liste (L1), afin de lire (E3) l'indicateur d'opérateur (IO) correspondant au numéro d'appel transmis,
transmettre (E5) l'indicateur d'opérateur (IO) en association au numéro d'appel transmis (NA) depuis le moyen serveur (SO, SA) au terminal d'usager (T1), et
dans le terminal d'usager, mémoriser (E6) l'indicateur d'opérateur transmis en correspondance au numéro d'appel transmis et présenter (E7) l'indicateur d'opérateur (IO) du premier réseau (RR1) si celui-ci est à un premier état prédéterminé.

2. Procédé conforme à la revendication 1, comprenant en outre une comparaison (E4), dans le moyen serveur (SA, SO), du numéro d'appel transmis à des numéros d'appel de terminaux mobiles rattachés à au moins un réseau de radiocommunications cellulaire (RR2) autre que le premier réseau, dans une deuxième liste (L2), afin de lire un indicateur de validité (IV) correspondant au numéro d'appel transmis et transmettre (E5) l'indicateur de validité en association à l'indicateur d'opérateur (IO) et au numéro d'appel transmis (NA) au terminal d'usager, et dans le terminal d'usager, mémoriser (E6) l'indicateur de validité transmis en correspondance au numéro d'appel transmis et présenter (E7) l'indicateur de validité (IV) si les indicateurs d'opérateur et de validité sont à un deuxième état prédéterminé, différent dudit premier état.

3. Procédé conforme à la revendication 2, comprenant en outre les étapes de :
générer (F1) une donnée numérique (DN) en correspondance à l'indicateur d'opérateur (IO) si celui-ci est au premier état, ou à l'indicateur de validité (IV) si celui-ci et l'indicateur d'opérateur sont au deuxième état,
transmettre (F2) la donnée numérique (DN) avec le numéro d'appel et les indicateurs d'opérateur et de validité depuis le moyen serveur (SO, SA) au terminal d'usager (T1),
mémoriser (F3) la donnée numérique (DN) transmise en correspondance au numéro d'appel transmis dans le terminal d'usager, et
transformer (F4) la donnée numérique (DN) pour la présenter dans le terminal d'usager.

4. Système pour présenter un indicateur d'opérateur (IO) dans un terminal (T1) d'un usager ayant un premier terminal mobile (T1a) rattaché à un premier réseau de radiocommunications cellulaire (RR1), ledit indicateur d'opérateur (IO) étant relatif à un deuxième terminal mobile (T2) dont le numéro d'appel est mémorisé dans le terminal d'usager (T1),
**caractérisé en ce qu'**il comprend un moyen serveur (SA, SO) rattaché au premier réseau (RR1) pour comparer ledit numéro d'appel transmis depuis le terminal d'usager (T1) à des numéros d'appel de terminaux mobiles rattachés au premier réseau, dans une première liste (L1), afin de lire l'indicateur d'opérateur (IO) correspondant au numéro d'appel transmis et de transmettre l'indicateur d'opérateur (IO) en association au numéro d'appel transmis (NA) depuis le moyen serveur (SO, SA) au terminal d'usager, et
**en ce que** le terminal d'usager (T1) comprend un moyen (MSO) pour mémoriser l'indicateur d'opérateur transmis en correspondance au numéro d'appel transmis et un moyen (IA) pour présenter l'indicateur d'opérateur (IO) du premier réseau (RR1) si celui-ci est à un premier état prédéterminé.

5. Système conforme à la revendication 4, dans lequel le moyen serveur comprend en outre un moyen (SO) pour comparer ledit numéro d'appel transmis à des numéros d'appel de terminaux mobiles rattachés à un réseau de radiocommunications cellulaire (RR2) autre que le premier réseau, dans une deuxième liste (L2), afin de lire un indicateur de validité (IV) correspondant au numéro d'appel transmis et transmettre l'indicateur de validité en association à l'indicateur d'opérateur (IO) et au numéro d'appel transmis (NA) au terminal d'usager, et le terminal d'usager (T1) comprend en outre un moyen (MSV) pour mémoriser l'indicateur de validité transmis en correspondance au numéro d'appel transmis et un moyen (IA) pour présenter l'indicateur de validité (IV) si les indicateurs d'opérateur et de validité sont à un deuxième état prédéterminé, différent dudit premier état.

6. Système conforme à la revendication 4 ou 5, dans lequel le terminal d'usager (T1) est confondu avec le premier terminal mobile (T1a).

7. Support d'enregistrement portable à microcontrôleur (CP) pour présenter un indicateur d'opérateur (IO) dans un terminal (T1) d'un usager ayant un premier terminal mobile (T1a) rattaché à un premier réseau de radiocommunications cellulaire (RR1), ledit indicateur d'opérateur (IO) étant relatif à un deuxième terminal mobile (T2) dont le numéro d'appel est mémorisé dans le terminal d'usager (T1), **caractérisé en ce qu'**il comprend :
un moyen (MMJ) pour transmettre le numéro d'appel (NA) depuis le terminal d'usager (T1) à un moyen serveur (SA, SO) rattaché au premier réseau (RR1),
un moyen (MSO) pour mémoriser un indicateur d'opérateur (IO) transmis depuis le moyen serveur et en association au numéro d'appel transmis, ledit numéro d'appel transmis (NA) ayant été comparé dans le moyen serveur à des numéros d'appel de terminaux mobiles rattachés au premier réseau, dans une première liste (L1), afin de lire l'indicateur d'opérateur correspondant au numéro d'appel transmis, et
un moyen (IA) pour présenter l'indicateur d'opérateur (IO) du premier réseau (RR1) si celui-ci est à un premier état prédéterminé.

8. Support d'enregistrement portable à microcontrôleur conforme à la revendication 7, comprenant en outre :
un moyen (MSV) pour mémoriser un indicateur de validité transmis depuis le moyen serveur en association au numéro d'appel transmis, ledit numéro d'appel transmis ayant été comparé dans le moyen serveur à des numéros d'appel de terminaux mobiles rattachés à un réseau de radiocommunications cellulaire (RR2) autre que le premier réseau, dans une deuxième liste (L2), afin de lire l'indicateur de validité (IV) correspondant au numéro d'appel transmis et transmettre l'indicateur de validité en association à l'indicateur d'opérateur (IO) et au numéro d'appel transmis (NA) au terminal d'usager, et
un moyen (IA) pour présenter l'indicateur de validité (IV) si les indicateurs d'opérateur et de validité sont à un deuxième état prédéterminé, différent dudit premier état.

9. Programme d'ordinateur apte à être mis en oeuvre dans un support d'enregistrement conforme à l'une des revendications 7 et 8.

## Claims

1. A method for displaying an operator indicator (IO) in a user terminal (T1) having a first mobile terminal (T1a) connected to a first cellular radio-communication network (RR1), said operator indicator (IO) relating to a second mobile terminal (T2), the call number of which is stored in the user terminal (T1), **characterised in that** it includes the steps of:
transmitting (E1) the call number (NA) from the user terminal (T1) to server means (SA, SO) connected to the first network (RR1),
comparing (E2) in the server means (SA, SO), said transmitted call number (NA) with call numbers of mobile terminals connected to the first network, in a first list (L1), so as to read (E3) the operator indicator (IO) matching the transmitted call number,
transmitting (E5) the operator indicator (IO) in association with the call number (NA) transmitted from the server means (SO, SA) to the user terminal (T1), and
in the user terminal, storing (E6) the transmitted operator indicator matching the transmitted call number and displaying (E7) the operator indicator (IO) of the first network (RR1) if the latter is in a first predetermined state.

2. A method according to claim 1, further comprising a comparison (E4) in the server means (SA, SO) of the transmitted call number with call numbers of mobile terminals connected to at least one cellular radio-communication network (RR2) different from the first network, in a second list (L2) so as to read a validity indicator (IV) matching the transmitted call number and transmitting (E5) the validity indicator in association with the operator indicator (IO) and the transmitted call number (NA) to the user terminal and, in the user terminal, storing (E6) the transmitted validity indicator matching the transmitted call number and displaying (E7) the validity indicator (IV) if the operator and validity indicators are in a second predetermined state, different from said first state.

3. A method according to the claim 2, further comprising the following steps:
generating (F1) a digital datum (DN) matching the operator indicator (IO) if the latter is in the first state or the validity indicator (IV) if the latter and the operator indicator are in the second state,
transmitting (F2) the digital datum (DN) with the call number and the operator and validity indicators from the server means (SO, SA) to the user terminal (T1),
storing (F3) the digital datum (DN) transmitted and matching the call number transmitted in the user terminal, and
transforming (F4) the digital datum (DN) to display same in the user terminal.

4. A system for displaying an operator indicator (IO) in a user terminal (T1) having a first mobile terminal (TIa) connected to a first cellular radio-communication network (RR1), with said operator indicator (IO) relating to a second mobile terminal (T2) the call number of which is stored in the user terminal (T1),
**characterised in that** it includes server means (SA, SO) connected to the first network (RR1) for comparing said call number transmitted from the user terminal (T1) with call numbers of mobile terminals connected to the first network, in a first list (L1), so as to read the operator indicator (IO) matching the transmitted call number and for transmitting the operator indicator (IO) in association with the transmitted call number (NA) from the server means (SO, SA) to the user terminal, and
**in that** the user terminal (T1) includes means (MSO) for storing the transmitted operator indicator matching the call number transmitted and means (IA) for displaying the operator indicator (IO) of the first network (RR1) if same is in a first predetermined state.

5. A system according to claim 4, wherein the server means further comprises means (SO) for comparing said transmitted call number with call numbers of mobile terminals connected to a cellular radio-communication network (RR2) different from the first network, and a second list (L2) in order to read a validity indicator (IV) matching the transmitted call number and transmitting the validity indicator in association with the operator indicator (IO) and the transmitted call number (NA) to the user terminal and the user terminal (T1) further comprises means (MSV) for memorising the transmitted validity indicator matching the transmitted call number and means (IA) for displaying the validity indicator (IV) if the operator and validity indicators are in a second predetermined state, different from said first state.

6. A system according to claim 4 or 5, wherein the user terminal (T1) coincides with the first mobile terminal (T1a).

7. A portable micro-processor recording medium (CP) for displaying an operator indicator (IO) in a user terminal (T1) having a first mobile terminal (T1a) connected to the first cellular radio-communication network (RR1), with said operator indicator (IO) relating to a second mobile terminal (T2) the call number of which is memorised in the user terminal (T1), **characterised in that** it includes:
means (MMJ) for transmitting the call number (NA) from the user terminal (T1) to the server means (SA, SO) connected to the first network (RR1),
means (MSO) for memorising an operator indicator (IO) transmitted from the server means and in association with the call number transmitted, said transmitted call number (NA) having been compared in the server means with call numbers of mobile terminals connected to the first network, in a first list (L1), so as to read the operator indicator matching the transmitted call number, and
means (IA) for displaying the operator indicator (IO) of the first network (RR1) if same is in a first predetermined state.

8. A portable recording medium with a microcontroller according to claim 7, further comprising:
means (MSV) for memorising a validity indicator transmitted from the server means in association with the transmitted call number, with said transmitted call number having been compared in the server means with call numbers of mobile terminals being connected to a cellular radio-communication network (RR2) different from the first network, in a second list (L2) so as to read the validity indicator (IV) matching the transmitted call number and to transmit the validity indicator in association with the operator indicator (IO) and with the transmitted call number (NA) to the user terminal, and
means (IA) for displaying the validity indicator (IV) if the operator and validity indicators are in a second predetermined state, different from said first state.

9. A computer programme able to be implemented in a recording medium according to one of claims 7 and 8.

## Patentansprüche

1. Verfahren für die Anzeige eines Betreiberindikators (IO) in einem Terminal (T1) eines Benutzers mit einem ersten mobilen Terminal (T1a), das an ein erstes zellular aufgebautes Funkverkehrsnetz (RR1) angebunden ist, wobei der besagte Betreiberindikator (IO) im Verhältnis zu einem zweiten mobilen Terminal (T2) steht, dessen Rufnummer im Benutzerterminal (T1) gespeichert ist, **dadurch gekennzeichnet, daß** es die folgenden Schritte umfaßt:
Die Rufnummer (NA) ab dem Benutzerterminal (T1) an ein Servermittel (SA, SO) übermitteln (E1), das an das erste Netz (RR1) angebunden ist,
im Servermittel (SA, SO) die besagte übermittelte Rufnummer (NA) mit Rufnummern von mobilen an das erste Netz angebundenen Terminalen in einer ersten Liste (L1) vergleichen (E2), um den Betreiberindikator (IO) zu lesen (E3), der der übermittelten Rufnummer entspricht,
den Betreiberindikator (IO) in Verbindung mit der übermittelten Rufnummer (NA) übermitteln (E5), die ab dem Servermittel (SO, SA) an das Benutzerterminal (T1) übermittelt wurde, und
im Benutzerterminal den Betreiberindikator speichern (E6), der entsprechend der übermittelten Rufnummer übermittelt wurde, und den Betreiberindikator (IO) des ersten Netzes (RR1) anzeigen (E7), wenn sich dieses in einem ersten vorbestimmten Zustand befindet.

2. Verfahren nach Anspruch 1, das ferner einen Vergleich (E4) im Servermittel (SA, SO) der übermittelten Rufnummer mit Rufnummern von mobilen Terminalen in einer zweiten Liste (L2) umfaßt, die an mindestens ein zellular aufgebautes Funkverkehrsnetz (RR2), und zwar an ein anderes als das erste Netz, angebunden sind, um einen der übermittelten Rufnummer entsprechenden Gültigkeitsindikator (IV) zu lesen und den Gültigkeitsindikator in Verbindung mit dem Betreiberindikator (IO) und der übermittelten Rufnummer (NA) an das Benutzerterminal zu übermitteln (E5) und im Benutzerterminal den Gültigkeitsindikator zu speichern (E6), der entsprechend der übermittelten Rufnummer übermittelt wurde, und den Gültigkeitsindikator (IV) anzeigen (E7), wenn sich der Betreiber- und der Gültigkeitsindikator in einem zweiten vorbestimmten Zustand befinden, der ein anderer als der besagte erste Zustand ist.

3. Verfahren nach Anspruch 2, das ferner die folgenden Schritte umfaßt:
Einen Zahlenwert (DN) entsprechend dem Betreiberindikator (IO) generieren (F1), wenn dieser sich im ersten Zustand befindet, oder entsprechend dem Gültigkeitsindikator (IV), wenn sich dieser und der Betreiberindikator im zweiten Zustand befinden,
den Zahlenwert (DN) mit der Rufnummer und dem Betreiber- und dem Gültigkeitsindikator ab dem Servermittel (SO, SA) an das Benutzerterminal (T1) übermitteln (F2),
den Zahlenwert (DN) speichern (F3), der entsprechend der an das Benutzerterminal übermittelten Rufnummer übermittelt wurde, und
den Zahlenwert (DN) umwandeln (F4), um ihn im Benutzerterminal anzuzeigen.

4. System für das Anzeigen eines Betreiberindikators (IO) in einem mobilen Terminal (T1) eines Benutzers mit einem ersten mobilen Terminal (T1a), das an ein erstes zellular aufgebautes Funkverkehrsnetz (RR1) angebunden ist, wobei der besagte Betreiberindikator (IO) im Verhältnis zu einem zweiten mobilen Terminal (T2) steht, dessen Rufnummer im Benutzerterminal (T1) gespeichert ist,
**dadurch gekennzeichnet, daß** es ein Servermittel (SA, SO) umfaßt, das an das erste Netz (RR1) angebunden ist, um die besagte ab dem Benutzerterminal (T1) übermittelte Rufnummer mit Rufnummern von an das erste Netz angebundenen mobilen Terminalen in einer ersten Liste (L1) zu vergleichen, um den der übermittelten Rufnummer entsprechenden Betreiberindikator (IO) zu lesen und den Betreiberindikator (IO) in Verbindung mit der ab dem Servermittel (SO, SA) übermittelten Rufnummer (NA) an das Benutzerterminal zu übermitteln, und
**dadurch**, daß das Benutzerterminal (T1) ein Mittel (MSO) zum Speichern des Betreiberindikators umfaßt, der entsprechend der übermittelten Rufnummer übermittelt wird, und ein Mittel (IA) für die Anzeige des Betreiberindikators (IO) des ersten Netzes (RR1), wenn sich dieses in einem ersten vorbestimmten Zustand befindet.

5. System nach Anspruch 4, in dem das Servermittel ferner ein Mittel (SO) zum Vergleichen der besagten übermittelten Rufnummer mit Rufnummern von mobilen Terminalen in einer zweiten Liste (L2) umfaßt, die an ein zellular aufgebautes Funkverkehrsnetz (RR2), und zwar an ein anderes als das erste Netz, angebunden sind, um einen der übermittelten Rufnummer entsprechenden Gültigkeitsindikator (IV) zu lesen und den Gültigkeitsindikator in Verbindung mit dem Betreiberindikator (IO) und der übermittelten Rufnummer (NA) an das Benutzerterminal zu übermitteln, und das Benutzerterminal (T1) umfaßt ferner ein Mittel (MSV) zum Speichern des entsprechend der übermittelten Rufnummer übermittelten Gültigkeitsindikators und ein Mittel (IA) zum Anzeigen des Gültigkeitsindikators (IV), wenn der Betreiber-und der Gültigkeitsindikator sich in einem zweiten vorbestimmten Zustand befinden, der ein anderer als der besagte erste Zustand ist.

6. System nach Anspruch 4 oder 5, in dem das Benutzerterminal (T1) mit dem ersten mobilen Terminal (T1a) kombiniert ist.

7. Tragbarer Aufzeichnungsträger mit Mikrocontroller (CP) zum Anzeigen eines Betreiberindikators (IO) in einem Terminal (T1) eines Benutzers mit einem ersten mobilen Terminal (T1a), das an ein erstes zellular aufgebautes Funkverkehrsnetz (RR1) angebunden ist, wobei der besagte Betreiberindikator (IO) im Verhältnis zu einem zweiten mobilen Terminal (T2) steht, dessen Rufnummer im Benutzerterminal (T1) gespeichert ist, **dadurch gekennzeichnet, daß** er folgende Teile umfaßt:
Ein Mittel (MMJ) für das Übermitteln der Rufnummer (NA) ab dem Benutzerterminal (T1) an ein Servermittel (SA, SO), das an das erste Netz (RR1) angebunden ist,
ein Mittel (MSO) für das Speichern eines ab dem Servermittel und in Verbindung mit der übermittelten Rufnummer übermittelten Betreiberindikators (IO), wobei die besagte übermittelte Rufnummer (NA) im Servermittel mit Rufnummern von an das erste Netz angebundenen mobilen Terminalen in einer ersten Liste (L1) verglichen worden ist, um den der übermittelten Rufnummer entsprechenden Betreiberindikator zu lesen, und
ein Mittel (IA) für das Anzeigen des Betreiberindikators (IO) des ersten Netzes (RR1), wenn sich dieses in einem ersten vorbestimmten Zustand befindet.

8. Tragbarer Aufzeichnungsträger mit Mikrocontroller nach Anspruch 7, der ferner folgende Teile umfaßt:
Ein Mittel (MSV) für das Speichern eines ab dem Servermittel in Verbindung mit der übermittelten Rufnummer übermittelten Gültigkeitsindikators, wobei die besagte übermittelte Rufnummer im Servermittel mit Rufnummern von an ein anderes zellular aufgebautes Funkverkehrsnetz (RR2) als das erste angebundenen mobilen Terminalen in einer zweiten Liste (L2) verglichen worden ist, um den der übermittelten Rufnummer entsprechenden Gültigkeitsindikator (IV) zu lesen und den Gültigkeitsindikator in Verbindung mit dem Betreiberindikator (IO) und mit der übermittelten Rufnummer (NA) an das Benutzerterminal zu übermitteln, und
ein Mittel (IA) für das Anzeigen des Gültigkeitsindikators (IV), wenn sich der Betreiber-und der Gültigkeitsindikator in einem zweiten vorbestimmten Zustand befinden, der anders als der besagte erste Zustand ist.

9. Rechnerprogramm, das geeignet ist, in einem Aufzeichnungsträger nach einem der vorstehenden Ansprüche 7 und 8 eingesetzt zu werden.
